(19) Europäisches Patentamt
European Patent Office
Office européen des brevets

(11) Numéro de publication: **0 340 121**
**A1**

(12) # DEMANDE DE BREVET EUROPEEN

(21) Numéro de dépôt: **89420125.0**

(22) Date de dépôt: **04.04.89**

(51) Int. Cl.4: **C 08 K 5/54**
C 08 L 83/04

(30) Priorité: **07.04.88 FR 8804850**

(43) Date de publication de la demande:
**02.11.89 Bulletin 89/44**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Perrin, Patrice**
**39, Rue Boileau**
**F-69006 Lyon (FR)**

(74) Mandataire: **Seugnet, Jean Louis et al**
**RHONE-POULENC CHIMIE Service Brevets Chimie**
**Centre de Recherches des Carrières B.P. 62**
**F-69192 Saint-Fons Cédex (FR)**

(54) **Composition organopolysiloxane à fonction acyloxy durcissable en élastomère autoadhérent.**

(57) La présente invention concerne une composition organopolysiloxane dont l'agent de réticulation comporte un acyloxysilane, caractérisée en ce qu'elle contient une quantité efficace d'un agent d'adhérence choisi parmi un mélange et le produit de réaction d'un composé organosilicié amino-fonctionnel porteur d'une fonction amine primaire et d'un composé organosilicié porteur d'un radical époxy-fonctionnel.

La composition selon l'invention qui comporte en outre une charge et un catalyseur de durcissement est utilisable pour réaliser des revêtements ou des joints et présente une adhérence fortement améliorée sur le verre, l'aluminium, le polychlorure de vinyle et autres substrats rencontrés dans l'industrie du bâtiment.

EP 0 340 121 A1

**Description**

## COMPOSITION ORGANOPOLYSILOXANE A FONCTION ACYLOXY DURCISSABLE EN ELASTOMERE AUTOADHERENT

La présente invention concerne une composition organopolysiloxane stable au stockage en l'absence d'humidité et durcissable en un élastomère auto-adhérent en présence d'humidité comportant comme constituants essentiels un polymère α-ω-dihydroxydiorganopolysiloxane, un agent de réticulation acyloxysilane et un agent d'adhérence choisi parmi un mélange et le produit de réaction d'un composé organosilicié amino-fonctionnel porteur d'une fonction amine primaire et d'un composé organosilicié porteur d'un radical époxy-fonctionnel.

Des compositions mono-composantes à réticulant acyloxysilane comportant généralement en outre une charge minérale et un catalyseur de durcissement sont bien connues depuis longtemps. Elles sont décrites notamment dans les brevets US-A-3 077 465, US-A-3 382 205, US-A-3 701 753, US-A-3 957 714, US-A-4 115 356, US-A-4 273 698, FR-A-2 429 811 et FR-A-2 459 820.

Ces compositions sont notamment utilisées pour des applications de revêtement et de jointoiement et en particulier comme agent de scellage dans l'industrie du bâtiment pour réaliser des structures vitrées.

L'élastomère durci doit, dans cette application particulière, présenter un module d'élasticité relativement bas et surtout adhérer fortement au verre et au matériau constitutif de la structure dans laquelle le verre est monté, tel que le bois, l'aluminium, le béton, le PVC (polychlorure de vinyle), les caoutchoucs naturels et synthétiques, la pierre, la faïence et la brique.

Toutefois les élastomères issus des compositions à réticulant acyloxysilane présentent généralement une adhérence insuffisante vis-à-vis de certains matériaux rencontrés dans l'industrie du bâtiment, en particulier l'aluminium et le PVC et l'on a déjà proposé divers additifs incorporés dans la composition en vue de remédier à cette insuffisance.

Il est ainsi connu par le brevet US-A-4 115 356 d'utiliser un trialcoxysilane porteur d'un radical époxy-fonctionnel comme agent d'adhérence pour des compositions élastomères silicone dont l'agent de réticulation est un polyacyloxysilane.

Le silane typique utilisé est le :

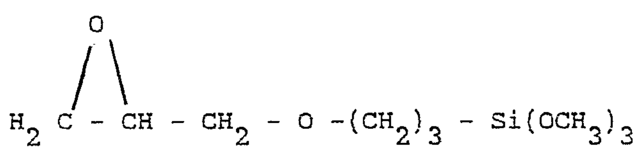 γ-glycidoxypropyltrimé-thoxysilane.

Il est également connu pour les compositions élastomère silicones à agent de réticulation polyalcoxysilane bi-composantes (EP-A-178 751) et mono-composantes (EP-A-221 644), d'utiliser un agent d'adhérence choisi parmi le produit de réaction ou le simple mélange d'un polyalcoxysilane amino-fonctionnel et d'un polyalcoxysilane époxy-fonctionnel.

Par ailleurs il est connu d'utiliser des silanes amino-fonctionnels porteur d'une amine primaire dans les compositions organopolysiloxanes à fonction alcoxy mono-composantes (voir par exemple EP-A-021 859) ou les bi-composantes (voir par exemple US-A-3 888 815), et dans les compositions organopolysiloxanes à réticulant cétiminoxysilane (voir par exemple FR-A2 074 144).

L'homme de métier a un préjugé pour utiliser ce type de silane dans les compositions organopolysiloxanes mono-composantes à fonction acyloxy car ces mastics acides présentent toujours un peu d'acide carboxylique libre qui, en réagissant sur l'amine primaire donne de l'eau qui réticule la composition. La composition n'est donc plus stable au stockage.

De façon surprenante et inattendue, la présente invention a permis de montrer que si on utilise le mélange ou le produit de réaction d'un composé organosilicié amino-fonctionnel à fonction amine primaire avec un composé organosilicié époxy-fonctionnel, on obtient une composition stable au stockage en absence d'humidité de l'air et qui réticule en un élastomère présentant de bonnes propriétés mécaniques. En outre l'élastomère adhère parfaitement sur tout support utilisé notamment dans le bâtiment et en particulier l'aluminium et le PVC.

En outre l'agent d'adhérence selon l'invention n'allonge pas le temps de réticulation.

La présente invention concerne en effet une composition organopolysiloxane stable au stockage en l'absence d'humidité et durcissable en un élastomère en présence d'humidité, caractérisée en ce qu'elle comporte :

A. - 100 parties en poids d'au moins un polymère α-ω-dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent des radicaux hydrocarbonés ayant de 1 à 10 atomes de carbone, au moins 50 % en nombre des radicaux T étant des groupes méthyle,

B. - 0,5 à 20 parties en poids d'au moins un agent de réticulation comportant au moins un acyloxysilane,

C. - 0,1 à 10 parties en poids d'un agent d'adhérence choisi parmi le mélange et le produit de réaction :

* d'un composé organosilicié $C_1$ porteur d'au moins un radical amino-fonctionnel ayant une fonction amine primaire, et
* d'un composé organosilicié $C_2$ porteur d'au moins un radical époxy-fonctionnel ayant de 4 à 20 atomes de carbone suivant un rapport de 0,01 à 2 équivalents de fonction amine primaire de $C_1$ par équivalent de fonction époxy de $C_2$,

D. - 5 à 250 parties en poids de charges minérales,

E. - 0,0004 à 3 parties en poids d'un catalyseur de durcissement qui est un composé d'un métal.

Le composé organosilicié $C_1$ porteur d'au moins un radical amino-fonctionnel peuvent être choisis parmi les produits de formule :

$C_1A$ les silanes de formule :

$X_a$
|
$RHNR'\ Si(OR'')_{3-a}$

dans laquelle :

- R représente un atome d'hydrogène, un radical alkyle ayant de 1 à 6 atomes de carbone inclusivement ou un radical hydrocarboné aliphatique relié à l'atome d'azote par une liaison carbone et contenant au moins un groupe amine primaire,
- R′ représente un radical hydrocarboné divalent ayant de 1 à 6 atomes de carbone présentant éventuellement une fonction éther,
- R″ représente un groupe alkyle ou alcoxyalkyle ayant moins de 8 atomes de carbone et a est 0 ou 1,
- X est choisi parmi les radicaux vinyle, phényle et alkyle en $C_1$-$C_6$.

Plus précisément ces silanes $C_1A$ peuvent répondre aux formules ci-après :
$(CH_3O)_3Si(CH_2)_3NH(CH_2)_2NH_2$ ; $(CH_3OCH_2CH_2O)_3Si(CH_2)_2NH_2$ ;
$(C_2H_5O)_3Si(CH_2)_3NH_2$ ; $(CH_3OCH_2CH_2O)_3Si(CH_2)_3NH_2$ ;
$(C_2H_5O)_3Si(CH_2)_3O(CH_2)_3NH_2$ ; $(C_2H_5O)_2C_6H_5Si(CH_2)_3O(CH_2)_3NH_2$ ;
$(C_2H_5O)_3SiCH_2O(CH_2)_2NH_2$ ; $(C_2H_5O)_3Si(CH_2)_3O(CH_2)_2NH_2$ ;
$(C_2H_5O)_2CH_3Si(CH_2)_3NH_2$.

$C_1B$ : les aminoorganopolysiloxanes provenant de la réaction des silanes $C_1A$ sur des organopolysiloxanes hydroxylés (i) à raison de 0,4 à 1,2 équivalent-gramme de fonction $NH_2$ par équivalent-gramme de fonction hydroxyle.

Ces polymères hydroxylés comprennent notamment :

- les huiles de formule $HO[Si(CH_3)_2O]_yH$ dans laquelle le symbole y représente un nombre quelconque allant de 2 à 22,
- les résines de rapport $CH_3/Si$ supérieur ou égal à 1,6, renfermant au moins 2 % en poids de groupes hydroxyles, constitués de motifs choisis principalement parmi ceux de formules $(CH_3)_3SiO_{0,5}$, $(CH_3)_2SiO$ et $CH_3SiO_{0,5}$.
- les résines méthylpolysiloxane MQ constituées de motifs $(CH_3)_3SiO_{0,5}$ (M) et $SiO_2$ (Q) avec un rapport molaire M/Q compris entre 0,4 et 1,2 et une teneur en poids en OH de 2 à 6%.

Les réactifs (i) et ($C_1A$) sont chauffés, de préférence en milieu solvant, à une température et pendant une période de temps suffisante pour éliminer la quantité attendue d'alcanol engendré par la réaction :

- $Si(OR'')_3 + HOSi\lessgtr \rightarrow Si(OR'')_2OSi\lessgtr + R''OH$

Il est préférable de couler l'huile hydroxylée dans un excès de silane aminé.

Il en résulte la formation de copolymères possédant à la fois outre les groupes méthyle, des groupes alcoxy tels que méthoxyle, éthoxyle ou méthoxyéthoxyle et des groupes aminoorganiques. De tels copolymères figurent par exemple dans le brevet français FR-A-1 381 590 et FR-A-1 385 693.

$C_1C$ : les diorganopolysiloxanes présentant dans la chaîne des motifs $(CH_3(R'NHR)SiO$, R′ et R ayant la signification donnée ci-dessus.

Ces polymères sont par exemple décrits dans les brevets GB-A-1 306 680 et US-A-4 412 035.

Le composé organosilicié $C_2$ porteur d'un radical époxy-fonctionnel ayant de 4 à 20 atomes de carbone peut être choisi parmi :

- $C_2A$ : les silanes de formule :

$X_a$
|
$A - Si(OR'')_{3-a}$

dans laquelle :

- X, R″ et a ont la même signification que ci-dessus pour $C_1A$.
  A est un radical organique hydrocarboné porteur d'un groupe époxy ayant de 4 à 20 atomes de carbone.
  Des exemples spécifiques de ces silanes sont les suivants :

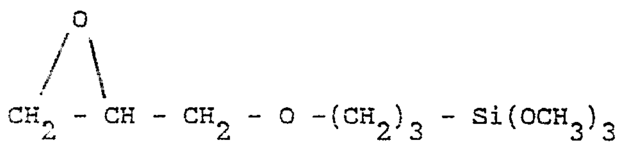

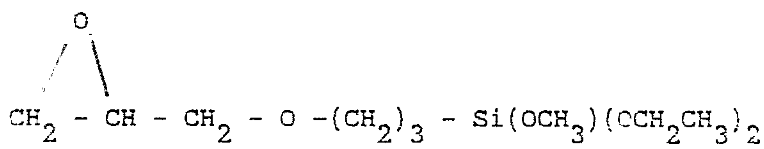

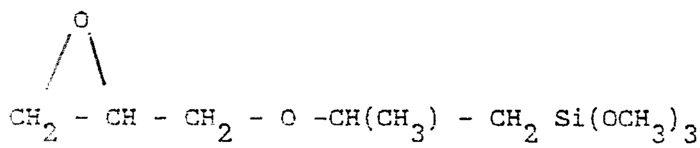

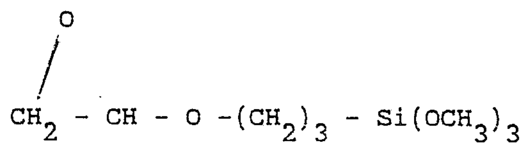

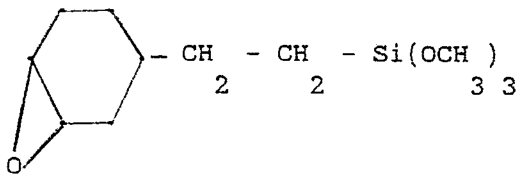

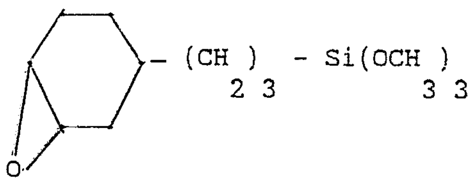

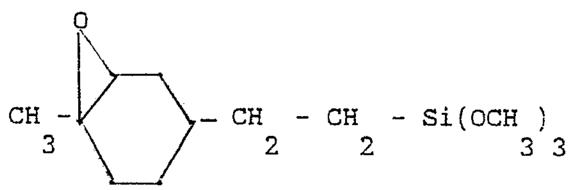

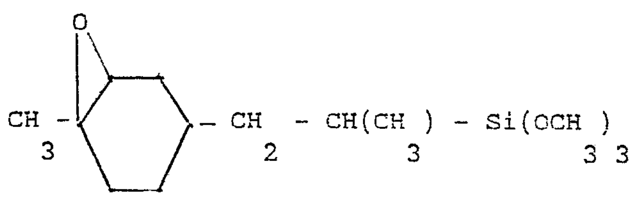

$C_2B$ : les diorganopolysiloxanes bloqués par un radical époxy-fonctionnel provenant de la réaction des silanes $C_2A$ sur les mêmes organopolysiloxanes hydroxylés (i) linéaires ou ramifiés utilisés pour synthétiser les polymères $C_1B$ ci-dessus.

Des polymères $C_2B$ sont par exemple décrits dans les brevets US-A-4 033 924, US-A-4 082 726, US-A-4 412 035 et EP-A-164 879.

Sont plus spécialement préférés le produit de réaction des résines MQ hydroxylées définies plus haut pour fabriquer $C_1B$ sur les silanes $C_2A$ comme par exemple décrit dans le brevet européen EP-A-226 934.

$C_2C$ : les diorganopolysiloxanes porteurs dans la chaîne de motif $ACH_3SiO$, A ayant la signification donnée ci-dessus.

Ces polymères sont en particulier décrits dans les brevets US-A-3 455 877, US-A-4 252 933 ET FR-A-2 012 012.

De façon à améliorer la stabilité au stockage de la composition, il est recommandé d'avoir un défaut de $C_1$ par rapport à $C_2$ calculé en équivalent gramme de fonction amine primaire de $C_1$ par rapport à la teneur en équivalent-gramme de fonction époxy de $C_2$. Juste la stoechiométrie est également préférée.

Ainsi on utilise de préférence des quantités de $C_1$ et $C_2$ suivant un rapport de 0,01 à 1, de préférence 0,1 à 1 inclus.

Quand on les mélange, les composés $C_1$ et $C_2$, en particulier les silanes $C_1A$ et $C_2B$ peuvent réagir l'un sur l'autre pour former un produit d'addition.

On peut ainsi accélérer la réaction par mélange préalable des deux silanes à une température comprise entre 20 et 80 °C.

Les produits d'addition préférés ont pour formules :

$$(C_2H_5O)_3Si(CH_2)_3 - NH - CH_2 - \underset{\underset{OH}{|}}{CH} - CH_2 - O(CH_2)_3Si(OCH_3)_3$$

$(CH_3O)_3Si(CH_2)_3 - NH - CH_2 - \underset{OH}{\underset{|}{CH}} - CH_2 - O(CH_2)_3Si(OCH_3)_3$

$(CH_3O)_3Si(CH_2)_3 - NH - (CH_2)_2 - NH - CH_2 - \underset{OH}{\underset{|}{CH}} - CH_2 - O(CH_2)_3Si(OCH_3)_3$

Les polymères α-ω-di(hydroxy)diorganopolysiloxane A de viscosité 700 à 1 000 000 mPa.s à 25 °C, de préférence 1 000 à 700 000 mPa.s à 25 °C, sont des polymères linéaires, constitués essentiellement de motifs diorganosiloxy de formule précitée $T_2SiO$, et bloqués à chaque extrémité de leur chaîne par un groupe hydroxyle ; toutefois, la présence de motifs mono-organosiloxy de formule $TSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles T, englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 4 atomes de carbone tels que les radicaux vinyle, allyle, butène-2 yle,
- les radicaux aryles et halogénoaryles mono-nucléaires ayant de 6 à 10 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle, les radicaux méthyle, phényle, vinyle et trifluoro-3,3,3 propyle sont les radicaux préférés.

A titre d'exemples concrets de motifs représentés par la formule $T_2SiO$ on peut citer ceux de formules :

- $(CH_3)_2SiO$,
- $CH_3(CH_2 = CH)SiO$
- $CH_3(CH_6H_5)SiO$
- $(CH_6H_5)_2SiO$,
- $CF_3CH_2CH_2(CH_3)SiO$,
- $NC - CH_2CH_2(CH_3)SiO$,
- $NC - CH(CH_3)CH_2(CH_2 = CH)SiO$,
- $NC - CH_2CH_2CH_2(C_6H_5)SiO$.

Il dont être compris que l'on peut utiliser comme polymère A un mélange constitué de polymères α-ω-di(hydroxy)diorganopolysiloxane qui diffèrent entre eux par le poids moléculaire et/ou la nature des groupements liés aux atomes de silicium.

Ces polymères α-ω-di(hydroxy)diorganopolysiloxane A sont commercialisés ; en outre, ils peuvent être aisément fabriqués selon des techniques maintenant bien connues.

Les agents réticulants B sont employés à raison de 0,5 à 25 parties, de préférence 1 à 18 parties pour 100 parties de A. Ce sont des composés portant plus de deux radicaux acyloxy par molécule.

De préférence l'agent réticulant B répond à la formule :

$R^1_aSi(OCOR^2)_{4-a}$

dans laquelle :

$R^1$ a la même définition que T donné sous A,

$R^2$ représente un radical hydrocarboné exempt d'insaturation aliphatique, ayant de 1 à 15 atomes de carbone, choisi parmi les radicaux alkyle linéaire ou ramifié, cycloalkyle et aryle.

A titre d'exemples concrets réticulants (B), peuvent être cités ceux répondant aux formules suivantes :

- $CH_3Si(OCOCH_3)_3$
- $C_2H_5Si(OCOCH_3)_3$
- $CH_2 = CHSi(OCOCH_3)_3$
- $C_6H_5Si(OCOCH_3)_3$
- $CH_3Si[(OCOCH(C_2H_5)(CH_2)_3\text{-}CH_3]_3$
- $CF_3CH_2CH_2Si(OCOC_6H_5)_3$
- $CH_3Si(OCOC_6H_5)_3$
- $CH_3Si(OCOCH_3)_2OCOCH(C_2H_5)(CH_2)_3CH_3$
- $CH_3COOSi[OCOCH(C_2H_5)CH_2)_3CH_3]_3$

Avec ces agents réticulants (B) peuvent être associés des silanes portant seulement chacun deux groupes acyloxy $B_1$ comme par exemple :

- $(CH_3)_2Si(OCOCH_3)_2$
- $[(CH_3)_3CO]_2Si(OCOCH_3)_2$
- $CH_2 = CH(CH_3)Si(OCOCH_3)_2$
- $(C_6H_5)_2Si(OCOCH_3)_2$
- $(CH_3)_2Si\ [OCOCH(C_2H_5)(CH_2)_3]_2$
- $[(CH_3)_3CO\ _2Si\ OCOCH(C_2H_5)\ CH_2\ _3CH_3]_2$

Le $[(CH_3)_3CO]\ _2Si(OCOCH_3)_2$ c'est-à-dire le di-t-butoxydiacétoxysilane est plus particulièrement préféré

car, en association avec l'agent d'adhérence C suivant l'invention, selon un rapport pondéral $B_1/C$ compris entre 0,1 et 2 inclus ; $B_1$ améliore très fortement l'adhérence sur l'aluminium brut ou anodisé et le PVC rigide.

Les charges minérales D sont utilisées à raison de 5 à 250 parties, de préférence 20 à 200 parties, pour 100 parties des polymères α-ω-di(hydroxy)diorganopolysiloxanes A.

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micormètre. Comme exemples de telles charges, on peut citer le quartz broyé, les silices de diatomées, le carbonate de calcium traité ou non traité, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges D peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganonocyclopolysiloxanes (brevets français FR-A-1 126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Les charges D peuvent être constituées d'un mélange de plusieurs types de charges de granulométrie différente ; ainsi par exemple, elles peuvent être constituées de 5 à 95 % de silices finement divisées de surface spécifique BET supérieure à 40 $m^2/g$ et de 95 à 5 % de silices plus grossièrement divisées de surface spécifique inférieure à 30 $m_2/g$ ou de carbonate de calcium traité ou non traité.

Les compositions contiennent un catalyseur E qui est un composé d'un métal choisi généralement parmi l'étain, le fer, le titane et le zirconium.

On utilise généralement de 0,0004 partie à 3 parties de E pour 100 parties de A.

En ce qui concerne l'étain, les catalyseurs les plus utilisés sont les dicarboxylates de dialkylétain en particulier le dilaurate ou le diacétate de dibutylétain (ouvrage de NOLL "CHEMISTRY AND TECHNOLOGY OF SILICONES, page 337, Edition 1968), et les diversates de dibutylétain (brevet français FR-A-2 066 159).

On peut également utiliser les produits de réactions de dicarboxylates de dialkylétain sur les polyalcoxysilanes ou les polysilicates d'alkyle (brevets américains US-A-3 186 963 et US-A-3 862 919 et le brevet belge BE-A-842 305).

On peut également utiliser les chelates d'étain comme décrits dans les brevets européens EP-A-147 323 et EP-A-235 049).

En ce qui concerne le titane et le zirconium on peut utiliser les catalyseurs, objets du brevet européen EP-A-102 268.

Tous les brevets ci-dessus mentionnant des catalyseurs de durcissement utilisables sont cités comme références.

Outre les constituants A à E décrits ci-dessus, les compositions selon l'invention peuvent contenir d'autres ingrédients.

Parmi ces ingrédients figurent des composés organosiliciques, principalement des polymères qui ont la faculté d'agir sur les caractéristiques physiques des compositions conformes à l'invention et/ou sur les propriétés mécaniques des élastomères silicones issus de ces compositions, utilisés à raison de 1 à 150 parties pour 100 parties de A.

Ces composés sont bien connus, ils comprennent par exemple :

- des polymères α-ω-bis(triorganosiloxy)diorganopolysiloxanes de viscosité d'au moins 10 mPa.s à 25 °C dont les radicaux organiques liés aux atomes de silicium sont choisis parmi les radicaux méthyle, vinyle, phényle ; de préférence sont utilisées des huiles α-ω-bis(triméthylsiloxy)diméthylpolysiloxanes de viscosité 10 mPa.s à 25 °C à 1 500 mPa.s à 25 °C,
- des polymères méthylpolysiloxanes ramifiés, liquides, renfermant de 0,1 à 8 % de groupes hydroxyles liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$ de 0,01 à 0,15 et à un rapport $CH_3SiO_{1,5}/(CH_3)_3SiO$ de 0,1 à 1,5,
- des huiles α-ω-di(hydroxy) diméthylpolysiloxanes de viscosité 10 à 300 ma.s à 25 °C et des huiles α-ω-di(hydroxy)méthylphénylpolysiloxanes de viscosité 200 à 1 000 mPa.s à 25 °C,
- du diphénylsilanediol, du tétraméthyl-1,1,3,3 disiloxanediol.

Les polymères α-ω-bis(triorganosiloxy)diorganopolysiloxanes précédents peuvent être remplacés totalement ou partiellement par des composés organiques inertes vis-à-vis des divers constituants des bases et miscibles au moins avec les polymères diorganopolysiloxanes A.

Comme exemples de plastifiants organiques on peut en particulier citer des coupes pétrolières de point d'ébullition supérieur à 200 °C, formées d'un mélange d'hydrocarbures aliphatiques et/ou aromatiques, des polybutylènes, de préférence de faible poids moléculaire, comme décrits dans les brevets français FR-A-2 254 231, FR-A-2 293 831 et FR-A-2 405 985, les produits d'alkylation du benzène en particulier, les polyalkylbenzènes obtenus par alkylation du benzène par des oléfines à longue chaîne linéaire ou ramifiée, en particulier des oléfines à 12 atomes de carbone issues de la polymérisation du propylène, comme décrits par

exemple dans le brevet français FR-A-2 446 849.

On peut également utiliser les polymères mixtes organiques polydiorganosiloxane tels que les copolymères à blocs polyoxyalkylènes polyorganosiloxanes, des esters phosphoriques (FR-A-2 372 203), du phosphate de trioctyle (FR-A-2 415 132), des esters dialcooliques d'acides dicarboxyliques (US-A-2 938 007) et des cycloalkylbenzènes (FR-A-2 392 476).

Les produits d'alkylation du benzène de poids moléculaire supérieur à 200, en particulier les alkylbenzènes et les polyalkylbenzènes sont les plastifiants organiques préférés.

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acides carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes A.

Pour fabriquer les compositions conformes à l'invention, il est recommandé d'utiliser un appareillage qui permette de brasser intimement à l'abri de l'humidité, avec et sans apport de chaleur, les constituants A, B, C, D et E ainsi qu'éventuellement les adjuvants et additifs précités.

Tous ces ingrédients peuvent être chargés dans l'appareillage selon un ordre quelconque d'introduction. Ainsi il est possible de mélanger tout d'abord les huiles $\alpha$-$\omega$-dihydroxydiméthylpolysiloxaniques (A) et les charges (D) et d'ajouter ensuite à l'empâtage obtenu l'additif C puis les agents réticulants (B) et les catalyseurs (E).

Il est également possible de mélanger les huiles (A) et les réticulants (B) et d'ajouter ultérieurement, aux produits de réaction homogènes de ces deux constituants (A) et (B), les charges (D), l'agent d'adhérence (C) et les catalyseurs (E). Au cours de ces opérations, les mélanges peuvent être chauffés à une température comprise dans l'intervalle 50-180 °C, sous la pression atmosphérique ou sous une pression réduite afin de favoriser le départ de matières volatiles telles que de l'eau, des polymères de bas poids moléculaire, des acides organiques et des oximes.

Les compositions ainsi préparées peuvent être utilisées telles quelles ou sous la forme de dispersions dans des diluants organiques. Ces diluants sont, de préférence, des produits usuels commercialisés, choisis parmi :

- les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène,
- les cétones aliphatiques et cycloaliphatiques telles que la méthylcétone, la méthylisobutylcétone, la cyclohexanone, l'isophorone,
- les esters tels que l'acétate d'éthyle, l'acétate de butyle, l'acétate d'éthylglycol.

Les quantités de diluants introduites doivent être suffisantes pour obtenir des dispersions stables s'étalant facilement sur les substrats. Ces quantités dépendent essentiellement de la nature et de la viscosité des compositions organopolysiloxaniques de départ. Elles peuvent donc varier dans de larges proportions ; néanmoins il est recommandé de fabriquer des dispersions contenant de 15 à 85 % en poids de diluants.

Les compositions conformes à l'invention, utilisées telles quelles ou sous forme de dispersions sont stables au stockage en l'absence d'eau et durcissent dès la température ambiante (après départ des solvants dans le cas de dispersions) en présence d'eau pour former des élastomères.

Après le dépôt des compositions utilisées telles quelles, sur des substrats solides, en atmosphère humide, on constate que leur durcissement en élastomères, s'effectue de l'extérieur à l'intérieur de la masse déposée. Il se forme d'abord en surface une peau puis la réticulation se poursuit en profondeur. La formation complète de la peau, qui se traduit par un toucher non collant de la surface, demande une période de temps pouvant être comprise dans l'intervalle allant de 1 minute à 55 minutes ; cette période dépend du taux d'humidité relative de l'atmosphère entourant les compositions et de la faculté de réticulation de celles-ci.

Par ailleurs le durcissement en profondeur des couches déposées qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Cette période de temps plus longue peut se situer entre 10 minutes et 15 heures.

Les compositions peuvent adhérer parfaitement une fois durcies en élastomères à n'importe quel substrat, en particulier l'aluminium et le PVC, sans le dépôt préalable d'un primaire d'adhérence même si les substrats recouverts des élastomères sont soumis à des contraintes thermiques, mécaniques ou autres, importantes.

Les compositions peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou en mousses synthétiques.

Les dispersions précitées de ces compositions dans des diluants sont plus spécialement utilisables pour l'imprégnation en couches minces d'articles tissés ou non-tissés, l'enduction de feuilles en métal ou en matière plastique ou cellulosique ; toutefois elles peuvent être projetées, par exemple par pulvérisation à l'aide d'un pistolet à peintures, sur n'importe quels substrats, pour lesquels il est nécessaire d'obtenir un

revêtement d'épaisseur de l'ordre de 5 à 300 µm. Après la projection des dispersions, les diluants s'évaporent et les compositions libérées durcissent en un film caoutchouteux parfaitement uniforme.

Le temps de durcissement se situe habituellement entre 5 minutes et plusieurs heures ne dépassant pas 10 heures ; cette durée dépend des facteurs déjà cités à propos de la durée de durcissement des compositions déposées en couches plus épaisses et également de la rapidité avec laquelle les diluants s'évaporent. Cette technique de dépôt par pulvérisation est très pratique pour enduire d'un film mince de très grandes surfaces et plus spécialement les coques de navires et les filets aquacoles. Le dépôt d'un film silicone antiadhérent sur les surfaces des bateaux en contact avec l'eau de mer évite l'encrassement de ces surfaces dû à la fixation et au développement d'organismes marins tels que les algues, bernacles, huitres, ascidies ; cette application figure par exemple dans le brevet américain US-A-3 702 778.

Par ailleurs, ce film d'élastomère peut servir comme revêtement antiadhérent inerte, non toxique, de divers substrats en contact avec des produits alimentaires tels que (1) des papiers d'emballage pour confiserie, ou viandes congelées, (2) des bacs métalliques utilisables pour la préparation de glaces et sorbets et (3) des filets métalliques dans leslquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pour brûlures.

Dans ce qui suit ou ce qui précède, sauf mentions contraires, les parties et pourcentages sont en poids.

- EXEMPLES 1 A 8 ET EXEMPLES COMPARATIFS 9 ET 10 :

a) - Différentes matières premières utilisées :

- l'huile A à extrémités silanol est choisie parmi :
- une huile $A_1$ qui est une huile polydiméthylsiloxane à extrémités silanol, de viscosité 70 000 mPa.s à 25 °C,
- une huile $A_2$ identique à $A_1$ mais présentant une viscosité de 135 000 mPa.s à 25 °C,
- le plastifiant P est choisi parmi :
- une huile $P_1$ qui est une huile polydiméthylsiloxane bloquée triméthylsiloxy, de viscosité 1 000 mPa.s à 25 °C,
- une huile $P_2$ qui est un polyalkylbenzène, de viscosité 100 mPa.s à 25 °C, commercialisée par la Société MONSANTO sous la dénomination commerciale SANTOGEN®
- le silane acyloxy B est choisi parmi :
- $B_1$ : un mélange (50/50 en poids) d'éthyltriacétoxysilane et de méthyltriacétoxysilane,
- $B_2$ : un mélange (20/80 en poids) d'éthyltriacétoxysilane et de méthyltriacétoxysilane,
- $B_3$ : éthyltriacétoxysilane,
- l'agent d'adhérence C est choisi parmi :
- $C_1$ l'adduct de formule :

$$(C_2H_5O)_3\text{-Si-}(CH_2)_3\text{-NH-}CH_2\text{-}\underset{\underset{OH}{|}}{CH}\text{-}CH_2\text{-O-}(CH_2)_3\text{-Si}(OCH_3)_3$$

- $C_2$ : un mélange (50/50 en poids) de l'adduct $C_1$ et de dit-butoxydiacétoxysilane,
- la charge D est choisie parmi :
- $D_1$ : une silice de combustion non traitée, de surface spécifique BET 150 $m^2/g$,
- $D_2$ : une silice de combustion traitée par de l'octaméthyltétracyclopolysiloxane, de surface spécifique BET 60 $m^2/g$,
- $D_3$ : du carbonate de calcium de diamètre particulaire moyen 5 µm,
- le catalyseur E est choisi parmi :
- $E_1$ : le dilaurate de dibutylétain,
- $E_2$ : le titanate de butyle.

Les diverses matières premières et leur teneur en parties en poids des compositions des exemples sont rassemblées dans le tableau 1 ci-après.

b) - mode opératoire de préparation des compositions :

dans des conditions anhydres on introduit dans un malaxeur 100 parties d'huile A, le plastifiant P et la charge D.

L'ensemble est brassé à 60 °C pendant 10 minutes ; au cours de cette opération un courant d'azote anhydre balaie l'atmosphère du malaxeur.

Toujours vers 60 °C, on ajoute au contenu du malaxeur le réticulant B, le catalyseur E et l'agent d'adhérence C. L'ensemble est encore brassé 5 minutes à 60 °C, puis dégazé à 3 kPa.

La composition auto-vulcanisable ainsi obtenue est ensuite placée dans des récipients métalliques étanches à l'air.

c) - mesure des propriétés mécaniques :

pour déterminer la faculté de cette composition de durcir rapidement à l'air ambiant en un élastomère, on l'étale à l'aide d'une râcle en une couche de 2 mm d'épaisseur sur une feuille en polyéthylène préablement traitée par un agent tensioactif anionique commercial ; cet agent est constitué du sel de sodium d'un sulfate d'alcoyle dont le groupe alcoyle est ramifié et possède au moins 12 atomes de carbone.

On note la période de temps au bout de laquelle la surface de la couche déposée est non collante. Cette

mesure est effectuée avec une baguette en bois que l'on met en contact par l'une des ses deux extrémités, avec la surface de la couche déposée ; on examine si une adhérence significative existe entre la baguette et la couche. Cette mesure sera appelée temps non collant (t en minutes) indiqué dans le tableau 1 ci-après.

Sur le film vieux de 7 jours, on mesure :
- la dureté SHORE A (DSA) selon la norme NF-T-51 109.
- la résistance à la rupture (R/R) en MPa selon la norme NF-T-46 002,
- l'allongement à la rupture (A/R) en % selon la norme NF-T-46 002,
- le module (M.Y.) en MPa pour un allongement de 100 %.

Pour chaque propriété mécanique on donne dans le tableau 2 ci-après deux valeurs. La première valeur correspond à une mesure faite sur l'élastomère initial, la deuxième valeur correspond à une mesure faite sur le même élastomère porté 48 heures à 100 °C.

d) - appréciation de l'adhérence :

$d_1$) : appréciation qualitative de l'adhérence :

les supports testés sont l'aluminium anodisé (AA), l'aluminum brut (AB) et le PVC rigide (PVC).

On extrude sur une plaque (50 x 75mm) de support, deux cordons de composition distants de 20 à 30 mm, chaque cordon ayant une longueur de 75 mm et un diamètre de 8 à 10 mm.

On laisse réticuler les deux cordons 7 jours à 20 °C.

On procède à l'essai de décollement à la main.

On note alors l'adhérence par une note allant de 0 (décollement ou rupture adhésive) à 100 (pas de décollement ou rupture cohésive).

Les résultats sont notés 1I dans le tableau 2 ci-après.

Sur une autre plaque et après 7 jours de réticulation, on immerge l'éprouvette dans de l'eau distillée pendant 4 jours à 20 °C.

On sort alors l'éprouvette ; on la sèche et on l'abandonne à l'air pendant 24 heures.

On fait alors les tests de décollement comme indiqués ci-dessus. Les résultats sont notés 1E dans le tableau 2 ci-après.

On effectue les mêmes opérations et mesures notées 1I et 1E ci-dessus sauf qu'après réticulation à l'air ambiant pendant 7 jours on fait vieillir artificiellement les éprouvettes en tube pendant 48 heures à 100 °C.

Les mesures effectuées sont notées 2I et 2E dans le tableau 2 ci-après.

d) - appréciation quantitative de l'adhérence :

Elle est faite suivant la norme AFNOR-P-85 507 pour l'essai à 23 °C jusqu'à rupture.

On mesure la résistance à la rupture (R/R) en MPa et l'allongement à la rupture (A/R) en %.

On note si la rupture est cohésive (RC) ou adhésive (RA) et le pourcentage de ruptures adhésive et cohésive.

Les supports testés (voir tableau 3 ci-après) sont le PVC rigide (PVC) et l'aluminium anodisé (AA).

Les résultats obtenus sont rassemblés dans les tableaux 1 à 3 ci-après.

Le tableau 1 donne les différents constituants des compositions des exemples.

L'exemple comparatif 9 a comme agent d'adhérence le γ-glycidoxypropyltriméthoxysilane.

L'exemple comparatif 10 n'a pas d'agent d'adhérence.

Le tableau 2 donne les propriétés mécaniques et les mesures d'adhérence qualitative des élastomères provenant des compositions des exemples 1 à 10.

Le tableau 3 donne les mesures quantitatives d'adhérence pour les élastomères provenant des compositions des exemples 2, 5, 6 et 8.

Des tableaux 2 et 3 il apparaît clairement que les agents d'adhérence selon l'invention confèrent une très bonne adhérence à la fois sur PVC et sur aluminium.

TABLEAU 1

| Exemple | 1 | 2 | 3 | 4 | 5 | 6 | 7 | 8 | 9 | 10 |
|---|---|---|---|---|---|---|---|---|---|---|
| A1 | 100 | 100 | 0 | 0 | 100 | 100 | 100 | 100 | 100 | 0 |
| A2 | 0 | 0 | 100 | 100 | 0 | 0 | 0 | 0 | 0 | 100 |
| P1 | 43 | 43 | 0 | 0 | 43 | 0 | 43 | 43 | 0 | 0 |
| P2 | 0 | 0 | - | - | 0 | - | 0 | 0 | - | - |
| D1 | 15 | 0 | 0 | 0 | 0 | 0 | 0 | 0 | 0 | 15 |
| D2 | 0 | 15 | 15 | 16 | 12 | 12 | 12 | 12 | 16 | 0 |
| D3 | 0 | 0 | 0 | 0 | 40 | 50 | 50 | 0 | 0 | 0 |
| B1 | 0 | 6 | 6 | 6 | 7 | 0 | 7 | 6 | 6 | 0 |
| B2 | 0 | 0 | 0 | 0 | 0 | 7 | 0 | 0 | 0 | 6 |
| B3 | 6 | 0 | 0 | 0 | 0 | 0 | 0 | 0 | 0 | 0 |
| E1 | 0,1 | 0,1 | 0,1 | 0,1 | 0,1 | 0 | 0,1 | 0,1 | 0,1 | 0 |
| E2 | 0 | 0 | 0 | 0 | 0 | 0,3 | 0 | 0 | 0 | 0,3 |
| C1 | 2 | 0 | 0 | 0 | 2,5 | 2 | 0 | 2 | 0 | 0 |
| C2 | 0 | 2 | 4 | 4 | 0 | 0 | 3 | 0 | 0 | 0 |
| t (mn) | 4 | 5 | 4 | 6 | 4 | 10 | 7 | 5 | 6 | 3 |

TABLEAU 2

| EXEMPLE | 1 | 2 | 3 | 4 | 5 | 6 | 7 | 8 | 9 | 10 |
|---|---|---|---|---|---|---|---|---|---|---|
| DSA | 15/7 | 15/10 | 15/7 | 15/8 | 17/13 | 17/4 | 17/- | 17/14 | 20/7 | 17/15 |
| MY | 0,3/0,2 | 0,3/0,2 | 0,2/0,2 | 0,3/0,2 | 0,3/0,2 | 0,3/- | 0,3/0,2 | 0,3/0,3 | 0,3/0,2 | 0,3/- |
| R/R | 2,0/0,8 | 2,0/1,0 | 1,6/1,0 | 1,6/1,4 | 1,0/1,0 | 1,0/- | 1,2/1,0 | 1,9/1,6 | 1,8/- | 1,8/- |
| A/R | 560/650 | 500/580 | 520/660 | 520/700 | 370/470 | 440/- | 420/580 | 470/630 | 430/530 | 500/- |
| A.B.1I | 100 | 100 | 100 | 100 | 100 | 100 | 100 | 100 | 100 | - |
| A.B.1E | 0 | 100 | 0 | 0 | 0 | 0 | 0 | 0 | 0 | - |
| A.B.2I | 100 | 100 | 100 | 100 | 100 | 100 | 100 | 100 | 100 | - |
| A.B.2E | 100 | 100 | 100 | 100 | - | - | - | 0 | 100 | - |
| A.A.1I | 100 | 100 | 100 | 100 | 100 | 100 | 100 | 100 | 100 | 100 |
| A.A.1E | 100 | 100 | 100 | 100 | 100 | 100 | 100 | 100 | 100 | 100 |
| A.A.2I | 100 | 100 | 100 | 100 | 100 | 100 | 100 | 100 | 100 | - |
| A.A.2E | 100 | 100 | 100 | 100 | 100 | 100 | 100 | 100 | 100 | 100 |
| PVC1I | 100 | 100 | 100 | 100 | 100 | 100 | 100 | 100 | 0 | - |
| PVC1E | 100 | 100 | 100 | 100 | 100 | 100 | 100 | 100 | 0 | - |
| PVC2I | 100 | 100 | 100 | 100 | 100 | 100 | 100 | 100 | 100 | - |
| PVC2E | 100 | 100 | 100 | 100 | - | 50 | 100 | 100 | 100 | - |

TABLEAU 3

| EXEMPLE | 8 | | 2 | | 6 | | 5 | |
|---|---|---|---|---|---|---|---|---|
| Support | A.A. | PVC | A.A. | PVC | A.A. | PVC | A.A. | PVC |
| MY | 0,25 | 0,26 | 0,40 | 0,40 | 0,45 | - | 0,28 | 0,27 |
| R/R | 0,3 | 0,3 | 0,45 | 0,40 | 0,45 | 0,37 | 0,31 | 0,29 |
| A/R | 150 | 160 | 120 | 120 | 100 | 100 | 180 | 180 |
| RC | 80 | 80 | 100 | 90 | 100 | 90 | 100 | 90 |
| RA | 20 | 20 | 0 | 10 | 0 | 10 | 0 | 10 |

**Revendications**

1. - Composition organopolysiloxane stable au stockage en l'absence d'humidité et durcissable en un élastomère en présence d'humidité, caractérisée en ce qu'elle comporte :

A. - 100 parties en poids d'au moins un polymère α-ω-dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent des radicaux hydrocarbonés ayant de 1 à 10 atomes de carbone, au moins 50 % en nombre des radicaux T étant des groupes méthyle,

B. - 0,5 à 20 parties en poids d'au moins un agent de réticulation comportant au moins un acyloxysilane,

C. - 0,1 à 10 parties en poids d'un agent d'adhérence choisi parmi le mélange et le produit de réaction :* d'un composé organosilicié $C_1$ porteur d'au moins un radical amino-fonctionnel ayant une fonction amine primaire, et

*d'un composé organosilicié $C_2$ porteur d'au moins un radical époxy-fonctionnel $C_2$ ayant de 4 à 20 atomes de carbone suivant un rapport de 0,01 à 2 équivalent-gramme de fonction amine primaire de $C_1$ par équivalent-gramme de fonction époxy de $C_2$,

D. - 5 à 250 parties en poids de charges minérales,

E. - 0,0004 à 3 parties en poids d'un catalyseur de durcissement qui est un composé d'un métal.

2. - Composition selon la revendication 1, caractérisée en ce que $C_1$ est choisi parmi :

$C_1A$ les silanes de formule :

$$\begin{array}{l} \qquad\quad X_a \\ \qquad\quad | \\ RHNR'\ Si(OR'')_{3-a} \end{array}$$

dans laquelle :

- R représente un atome d'hydrogène, un radical alkyle ayant de 1 à 6 atomes de carbone inclusivement ou un radical hydrocarboné aliphatique relié à l'atome d'azote par une liaison carbone et contenant au moins un groupe amine primaire,
- R′ représente un radical hydrocarboné di-valent ayant de 1 à 6 atomes de carbone présentant éventuellement une fonction éther,
- R″ représente un groupe alkyle ou alcoxyalkyle ayant moins de 8 atomes de carbone et a est 0 ou 1,
- X est choisi parmi les radicaux vinyle, phényle et alkyle en $C_1$-$C_6$.

$C_1B$ : les aminoorganopolysiloxanes provenant de la réaction des silanes $C_1A$ sur des organopolysiloxanes hydroxylés (i) à raison de 0,4 à 1,2 équivalent-gramme de fonction $NH_2$ par équivalent-gramme de fonction hydroxyle.

$C_1C$ : les diorganopolysiloxanes présentant dans la chaîne des motifs $(CH_3)(RNHR')SiO$, R′ et R ayant la signification donnée ci-dessus.

3. - Composition selon la revendication 1 ou 2, caractérisée en ce que $C_2$ est choisi parmi :

- $C_2A$ : les silanes de formule :

$$\begin{array}{l} \quad X_a \\ \quad | \\ A - Si(OR'')_{3-a} \end{array}$$

dans laquelle :

- X, R" et a ont la même signification que ci-dessus pour $C_1A$.

A est un radical organique hydrocarboné porteur d'un groupe époxy ayant de 4 à 20 atomes de carbone.

$C_2B$ : les diorganopolysiloxanes bloqués par un radical époxy-fonctionnel provenant de la réaction des silanes $C_2A$ sur les mêmes organopolysiloxanes hydroxylés (i) linéaires ou ramifiés utilisés pour synthétiser les polymères $C_1B$ ci-dessus.

$C_2C$ : les diorganopolysiloxanes porteurs dans la chaîne de motif $ACH_3SiO$, A ayant la signification donnée ci-dessus.

4. - Composition selon l'une quelconque des revendications précédentes, caractérisée en ce que $C_1$ and $C_2$ sont dans un rapport, calculé en équivalent-gramme de fonction amine primaire de $C_1$ et en équivalent-gramme de fonction époxy de $C_2$, compris entre 0,01 et 1 inclus.

5. - Composition selon l'une quelconque des revendications précédentes, caractérisée en ce que le silane $C_1A$ est choisi parmi les silanes de formules :

$(CH_3O)_3Si(CH_2)_3NH(CH_2)_2NH_2$ ; $(CH_3OCH_2CH_2O)_3Si(CH_2)_2NH_2$ ;
$(C_2H_5O)_3Si(CH_2)_3NH_2$ ; $(CH_3OCH_2CH_2O)_3Si(CH_2)_3NH_2$ ;
$(C_2H_5O)_3Si(CH_2)_3O(CH_2)_3NH_2$ ; $(C_2H_5O)_2C_6H_5Si(CH_2)_3O(CH_2)_3NH_2$ ;
$(C_2H_5O)_3SiCH_2O(CH_2)_2NH_2$ ; $(C_2H_5O)_3Si(CH_2)_3O(CH_2)_2NH_2$ ;
$(C_2H_5O)_2CH_3Si(CH_2)_3NH_2$ .

6. - Composition selon l'une quelconque des revendications précédentes, caractérisée en ce que le silane $C_2A$ est choisi parmi les silanes de formules :

$$\begin{array}{l} \quad O \\ CH_2 - CH - CH_2 - O -(CH_2)_3 - Si(OCH_3)_3 \end{array}$$

$$\begin{array}{l} \quad O \\ CH_2 - CH - CH_2 - O -(CH_2)_3 - Si(OCH_3)(OCH_2CH_3)_2 \end{array}$$

$$\begin{array}{l} \quad O \\ CH_2 - CH - CH_2 - O -CH(CH_3) - CH_2\ Si(OCH_3)_3 \end{array}$$

$$\begin{array}{l} \quad O \\ CH_2 - CH - O -(CH_2)_3 - Si(OCH_3)_3 \end{array}$$

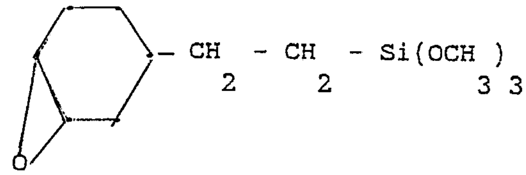

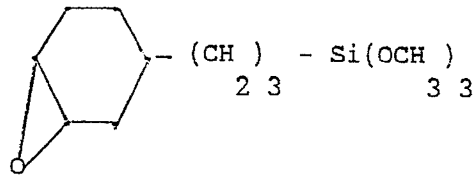

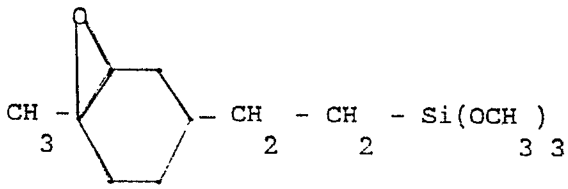

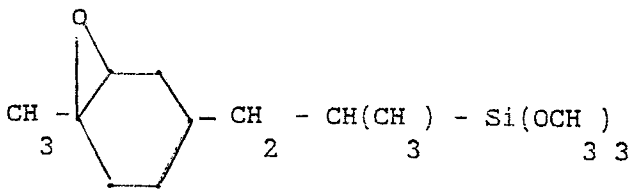

7. - Composition selon l'une quelconque des revendications 1 à 4, caractérisée en ce qu'on utilise le produit de réaction entre $C_1A$ et $C_2A$ répondant à la formule :

$(C_2H_5O)_3Si(CH_2)_3 - NH - CH_2 - \underset{OH}{\underset{|}{CH}} - CH_2 - O(CH_2)_3Si(OCH_3)_3$

$(CH_3O)_3Si(CH_2)_3 - NH - CH_2 - \underset{OH}{\underset{|}{CH}} - CH_2 - O(CH_2)_3Si(OCH_3)_3$

$(CH_3O)_3Si(CH_2)_3 - NH - (CH_2)_2 - NH - CH_2 - \underset{CH}{\underset{|}{CH}} - CH_2 - O(CH_2)_3Si(OCH_3)_3$

8. - Composition selon l'une quelconque des revendications précédentes, caractérisée en ce qu'elle comporte en outre du di-t-butoxydiacétoxysilane $B_1$ suivant un rapport pondéral $B_1/C$ compris entre 0,1 et 2 inclus.